# EUROPEAN PATENT APPLICATION

(11) **EP 4 601 062 A1**
(43) Date of publication of application: **13.08.2025**
(21) Application number: 23881537.7
(22) Date of filing: 20.09.2023
(51) Int. Cl.: H01M 10/054, H01M 10/052, H01M 50/538, H01M 10/0587

(54) **WOUND BATTERY CELL, BATTERY, BATTERY ASSEMBLY, AND ELECTRICAL APPARATUS**

(30) Priority: 26.10.2022 CN 202222831093 U
(71) Applicant: CONTEMPORARY AMPEREX TECHNOLOGY (HONG KONG) LIMITED, Hong Kong (HK)
(72) Inventor: JIANG, Jiali, Ningde, Fujian 352100 (CN); MAO, Guoan, Ningde, Fujian 352100 (CN); YAN, Han, Ningde, Fujian 352100 (CN); CHEN, Yuefei, Ningde, Fujian 352100 (CN); CAO, Junqi, Ningde, Fujian 352100 (CN)
(74) Representative: Ziebig Hengelhaupt Intellectual Property Attorneys Patentanwaltskanzlei PartGmbB
(86) International application number: PCT/CN2023/120176
(87) International publication number: WO 2024/087957

(57) **Abstract**

A jelly roll battery cell, a battery, a battery assembly and an electric device. The jelly roll battery cell (100) includes a main body portion (10) and a tab portion (20); one side of each positive winding portion (101a) in one part of positive winding portions (101a) is connected to one positive tab (21), and one side of each positive winding portion (101a) in the other part of the positive winding portions (101a) is connected to two positive tabs (21); and/or, one side of each negative winding portion (101b) in one part of negative winding portions (101b) is connected to one negative tab (22), and one side of each negative winding portion (101b) in the other part of the negative winding portions (101b) is connected to two negative tabs (22). This structure not only increases a number of the positive/negative tabs and a flow area of the jelly roll battery cell, but also avoids interlayer pseudo soldering between excessive positive/negative tabs and electrically conductive connecting welds by means of a restriction on the number of positive/negative tabs.

## Description

### CROSS-REFERENCE TO RELATED APPLICATIONS

The present application claims priority to Chinese Patent Application No. 202222831093.5, filed on October 26, 2022, the content of which is incorporated herein by reference in its entirety.

### TECHNICAL FIELD

The present application relates to the technical field of battery technologies, and in particular to a jelly roll battery cell, a battery, a battery assembly and an electric device.

### BACKGROUND

The background section merely provides background information related to the present application and is not necessarily prior art.

The secondary batteries currently available on the market have attracted extensive attention due to their advantages such as ultra-long service lives, safety in use and large capacities. The battery cell of a secondary battery is a main component that affects the electrochemical performance of the secondary battery. Taking a jelly roll battery cell as an example, which is formed by winding a positive electrode plate, a negative electrode plate and a separator, at least one tab is arranged on the positive electrode plate and the negative electrode plate respectively. In order to increase the flow area and reduce the internal resistance of the battery, for some jelly roll battery cells, a plurality of tabs are arranged on the positive electrode plate and the negative electrode plate respectively. With the trend of increasing capacities of secondary batteries, the number of layers of electrode plates of the jelly roll battery cell has been gradually increased, and the numbers of layers of the plurality of tabs of the positive electrode plate and the plurality of tabs of the negative electrode plate have been increased accordingly, which is prone to the problem of excessive layers of the plurality of tabs of the positive electrode plate and the plurality of tabs of the negative electrode plate. This problem easily causes that existing ultrasonic vibration energy fails to penetrate a plurality of layers of tabs, resulting in the problem of interlayer pseudo soldering between tabs of the battery cell and electrically conductive connecting welds.

### SUMMARY

The technical problem mainly to be solved by the present application is the problem of interlayer pseudo soldering between tabs of a battery cell and electrically conductive connecting welds due to excessive layers of tabs of a jelly roll battery cell.

In order to solve the above technical problem, a technical solution provided by the present application is: a jelly roll battery cell, including:
a main body portion, which includes a positive electrode plate, a negative electrode plate and a separator, where the separator is stacked between the positive electrode plate and the negative electrode plate; the main body portion forms a flat winding body by means of winding around a virtual axis; the main body portion includes a plurality of circles of winding portions along a winding direction; the winding portion includes a positive winding portion, a negative winding portion and a separator winding portion; and
a tab portion, which is connected to one side of the main body portion, and includes a plurality of positive tabs and a plurality of negative tabs,
where one side of each positive winding portion in one part of the positive winding portions is connected to one positive tab, and one side of each positive winding portion in the other part of the positive winding portions is connected to two positive tabs; the two positive tabs of each positive winding portion in the other part of the positive winding portions are located on two opposite sides of the virtual axis along a thickness direction of the main body portion; and/or
one side of each negative winding portion in one part of the negative winding portions is connected to one negative tab, and one side of each negative winding portion in the other part of the negative winding portions is connected to two negative tabs; and the two negative tabs of each negative winding portion in the other part of the negative winding portions are located on two opposite sides of the virtual axis in the thickness direction of the main body portion.

In some embodiments, one side of each positive winding portion in one part of positive winding portions is connected to one positive tab, and one side of each positive winding portion in the other part of the positive winding portions is connected to two positive tabs; and one side of each negative winding portion in one part of negative winding portions is connected to one negative tab, and one side of each negative winding portion in the other part of the negative winding portions is connected to two negative tabs.

In some embodiments, one side of each positive winding portion in one part of positive winding portions is connected to one positive tab, one side of each positive winding portion in the other part of the positive winding portions is connected to two positive tabs, and the two negative tabs of each negative winding portion in the other part of the negative winding portions are arranged axially symmetrically along the thickness direction of the main body portion; and each negative winding portion is connected to one negative tab.

In some embodiments, one side of each negative winding portion in one part of negative winding portions is connected to one negative tab, one side of each negative winding portion in the other part of the negative winding portions is connected to two negative tabs, and the two negative tabs of each negative winding portion in the other part of the negative winding portions are arranged axially symmetrically along the thickness direction of the main body portion; and each positive winding portion is connected to one positive tab.

In some embodiments, along a direction from inner circles to outer circles, one side of each positive winding portion in the first half of positive winding portions is connected to two positive tabs, and one side of each positive winding portion in the second half of the positive winding portions is connected to one positive tab; and/or
along the direction from inner circles to outer circles, one side of each negative winding portion in the first half of negative winding portions is connected to two negative tabs, and one side of each negative winding portion in the second half of the negative winding portions is connected to one negative tab.

Optionally, along the direction from inner circles to outer circles, one side of each positive winding portion in odd-numbered circles of positive winding portions is connected to two positive tabs, and one side of each positive winding portion in even-numbered circles of the positive winding portions is connected to one positive tab; or alternatively, one side of each positive winding portion in odd-numbered circles of positive winding portions is connected to one positive tab, and one side of each positive winding portion in even-numbered circles of the positive winding portions is connected to two positive tabs; and/or
along the direction from inner circles to outer circles, one side of each negative winding portion in odd-numbered circles of negative winding portions is connected to two negative tabs, and one side of each negative winding portion in even-numbered circles of the negative winding portions is connected to one negative tab; or alternatively, one side of each negative winding portion in odd-numbered circles of negative winding portions is connected to one negative tab, and one side of each negative winding portion in even-numbered circles of the negative winding portions is connected to two negative tabs.

In some embodiments, the positive electrode plate includes a positive current collector and a positive active material layer arranged on one side of the positive current collector; the negative electrode plate includes a negative current collector and a negative active material layer arranged on one side of the negative current collector;
one end of the positive tab is connected to the positive current collector of the corresponding positive winding portion, and the other end thereof is away from the positive current collector along the virtual axis; one end of the negative tab is connected to the negative current collector of the corresponding negative winding portion, and the other end thereof is away from the negative current collector along the virtual axis; and along the thickness direction of the main body portion, a plurality of positive tabs located on the same side of the virtual axis are stacked, and a plurality of negative tabs located on the same side of the virtual axis are stacked.

In some embodiments, the positive tab has the same thickness as the positive current collector; and the negative tab has the same thickness as the negative current collector.

In some embodiments, in the direction of the virtual axis, the plurality of positive tabs stacked are tabs with an equal length or tabs with gradient lengths; and in the direction of the virtual axis, the plurality of negative tabs stacked are tabs with an equal length or tabs with gradient lengths.

In some embodiments, the plurality of positive tabs stacked are tabs with an equal length, and the length of the positive tabs is 28%-29% of the width of the positive winding portions connected to the positive tabs; and the plurality of negative tabs stacked are tabs with an equal length, and the length of the negative tabs is 28%-29% of the width of the negative winding portions connected to the negative tabs.

In some embodiments, the plurality of positive tabs stacked are tabs with gradient lengths; in the plurality of positive tabs, the maximum length of the positive tabs is 28%-29% of the width of the positive winding portions connected to the positive tabs, and the minimum length of the positive tabs is 19%-20% of the width of the positive winding portions connected to the positive tabs; and the lengths of the plurality of positive tabs stacked are decreased progressively layer by layer as per uniform-gradient dimensions along the direction from inner circles to outer circles; and
the plurality of negative tabs stacked are tabs with gradient lengths; in the plurality of negative tabs, the maximum length of the negative tabs is 28%-29% of the width of the negative winding portions connected to the negative tabs, and the minimum length of the negative tabs is 19%-20% of the width of the negative winding portions connected to the negative tabs; and the lengths of the plurality of negative tabs stacked are decreased progressively layer by layer as per uniform-gradient dimensions along the direction from inner circles to outer circles.

In some embodiments, the width of the end that is of the positive tab and that is away from the positive current collector is 10%-12.5% of the circumference of the winding portion at the innermost circle of the flat winding body, and the width of the end of the positive tab connected to the positive winding portion is 11%-14% of the circumference of the winding portion at the innermost circle of the flat winding body.

In some embodiments, the flat winding body has a length direction and a width direction; the virtual axis is parallel to the width direction; and the width of the negative electrode plate is greater than the width of the positive electrode plate, and the length of the negative electrode plate is greater than the length of the positive electrode plate.

In some embodiments, an innermost circle of the flat winding body is a part of the negative winding portions; and an outermost circle of the flat winding body is a part of the negative winding portions.

In some embodiments, one side of each positive winding portion in the positive winding portions is connected to one or two positive tabs; one side of each negative winding portion in the negative winding portions is connected to one or two negative tabs; or
one side of each positive winding portion in the positive winding portions is connected to one or two positive tabs; in the negative winding portions, the negative winding portion at the innermost circle or the negative winding portion at the outermost circle is not provided with the negative tab; and one side of each of the other negative winding portions is connected to one or two negative tabs.

In order to solve the above technical problem, another technical solution provided by the present application is: a battery, including any one of the above jelly roll battery cells.

In order to solve the above technical problem, yet another technical solution provided by the present application is: a battery assembly, including the above batteries.

In order to solve the above technical problem, still yet another technical solution provided by the present application is: an electric device, including the above battery assembly.

Beneficial effects: in the present application, by connecting one positive/negative tab to one side of each positive/negative winding portion in one part of positive/negative winding portions, and connecting two positive/negative tabs to one side of each positive/negative winding portion in the other part of the positive/negative winding portions, the number of positive/negative tabs is increased, and the flow area of the jelly roll battery cell is increased; in addition, due to a restriction on the number of positive/negative tabs, interlayer pseudo soldering between excessive positive/negative tabs and electrically conductive connecting welds is avoided.

### BRIEF DESCRIPTION OF DRAWINGS

In order to explain the technical solutions in the embodiments of the present application more clearly, drawings to be used in the description of embodiments will be described briefly below. Apparently, the accompanying drawings in the following description show merely some embodiments of the present application, and other drawings can be derived from these accompanying drawings by a person of ordinary skill in the art without making any creative efforts.
FIG. 1 is a structural view of a jelly roll battery cell according to the present application;
FIG. 2 is a top view of the jelly roll battery cell shown in FIG. 1;
FIG. 3 is a structural view of electrode plates and a separator of the jelly roll battery cell shown in FIG. 1;
FIG. 4a is a partial sectional view along line A-A of the jelly roll battery cell shown in FIG. 2;
FIG. 4b is a partial sectional view along line B-B of the jelly roll battery cell shown in FIG. 2;
FIG. 5a is a second partial sectional view along line A-A of the jelly roll battery cell shown in FIG. 2;
FIG. 5b is a second partial sectional view along line B-B of the jelly roll battery cell shown in FIG. 2;
FIG. 6 is a top view of a second embodiment of a jelly roll battery cell according to the present application;
FIG. 7 is a top view of a third embodiment of a jelly roll battery cell according to the present application;
FIG. 8 is a top view of a fourth embodiment of a jelly roll battery cell according to the present application;
FIG. 9 is a top view of a fifth embodiment of a jelly roll battery cell according to the present application;
FIG. 10 is a top view of a sixth embodiment of a jelly roll battery cell according to the present application;
FIG. 11 is a structural view of a battery according to the present application;
FIG. 12 is a structural view of a battery assembly according to the present application; and
FIG. 13 is a structural view of an electric device according to the present application.

### Reference numerals:

100 - jelly roll battery cell; 10 - main body portion; 11 - positive electrode plate; 12 - negative electrode plate; 13 - separator; Y - virtual axis; H - thickness of main body portion; X - axis perpendicular to thickness direction of main body portion and perpendicular to direction of virtual axis; 101 - winding portion; 101a - positive winding portion; 101b - negative winding portion; 101c - separator winding portion; 20 - tab portion; 21 - positive tab; 22 - negative tab; 11a - positive current collector; 11b - positive active material layer; 12a - negative current collector; 12b - negative active material layer; L - length of positive/negative tab; W - width of positive/negative winding portion; K1 - width of end of positive/negative tab away from positive/negative current collector; K2 - width of end of positive/negative tab connected to positive/negative current collector; S1 - first frame; S2 - second frame; 200 - battery; 210 - shell; 300 - battery assembly; 400 - electric vehicle; 401 - controller; and 402 - motor.

### DETAILED DESCRIPTION OF EMBODIMENTS

The following will clearly and completely describe the technical solutions in embodiments of the present application in combination with the drawings in the embodiments of the present application. Obviously, the described embodiments are merely a part of the embodiments of the present application, not all of the embodiments. All other embodiments obtained by a person of ordinary skill in the art based on the embodiments of the present application without making any creative effort fall within the protection scope of the present application.

In the present application, terms "first", "second" and "third" are used for descriptive purposes only, and cannot be understood as indicating or implying relative importance, or implicitly specifying quantities of technical features indicated. Thus, features defined with "first", "second" and "third" can expressly or implicitly include at least one of the features. In the description of the present application, the meaning of "a plurality of" is at least two, such as two or three, unless otherwise clearly and specifically limited. All directional indications (such as up, down, left, right, front and rear) in embodiments of the present application are only used to explain relative positional relations and motions among various components under a certain specific attitude (as shown in drawings), and correspondingly vary with the specific attitude. In addition, terms "include" and "have" and their variants in any forms are intended to cover non-exclusive inclusion. For example, processes, methods, systems, products or apparatuses including a series of steps or units are not limited to listed steps or units, and optionally further include non-listed steps or units, or optionally further include other steps or units that are inherent to these processes, methods, products or apparatuses.

Reference to "embodiments" in this specification means that particular features, structures, or characteristics described with reference to the embodiments may be included in at least one embodiment of the present application. Occurrence of the phrase in various places in this specification does not necessarily refer to the same embodiment, nor is an independent or alternative embodiment that is mutually exclusive with other embodiments. It is understood explicitly and implicitly by a person skilled in the art that the embodiments described in this specification may be combined with other embodiments.

Researcher of the present application have found through research that a flow area of a battery cell is the product of the sum of thicknesses of a plurality of layers of tabs and a width of tabs. For some battery cell designs with extreme energy densities, substrates should be as thin as possible. In order to meet requirements for the flow area, a number of tab layers or a bottom width of tabs has to be increased. When the number of tab layers remains unchanged and the width of tabs is increased, in case that excursions of tabs conform to specifications, an excursion to the left may interfere with a lower plastic piece under an explosion-proof valve, leading to the risk of tabs being adversely lap-joined to the lower plastic piece (under a high-temperature cycling condition of the battery cell, the lower plastic piece softens and deforms, and tabs lap-joined to the lower plastic piece may directly come into contact with the explosion-proof valve of a battery, which causes short circuits and greatly increases the risk of fire in the battery); alternatively, an excursion to the right may interfere with a liquid injection hole, causing the risk of clogging of the liquid injection hole. Therefore, increasing the number of tab layers is an optional way to meet requirements for the flow area. However, the number of tab layers cannot be increased without limits. In case that the number of tab layers is increased, it will be necessary to avoid the problem of interlayer pseudo soldering between tabs of the battery cell and electrically conductive connecting welds.

The present application will be described in detail below in conjunction with drawings and embodiments.

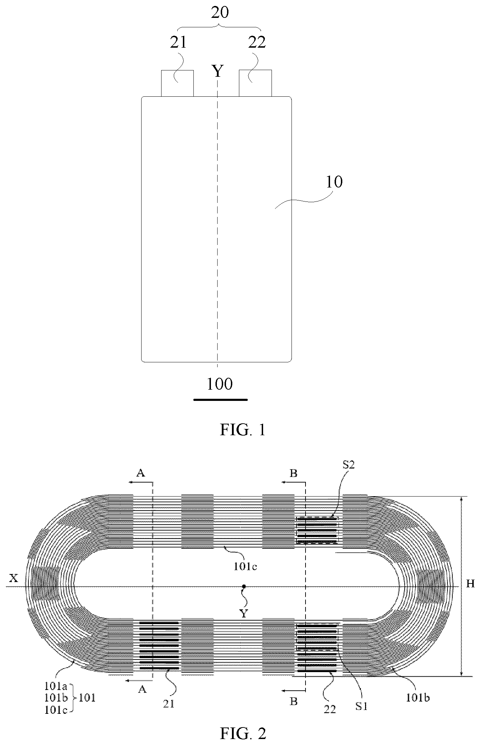

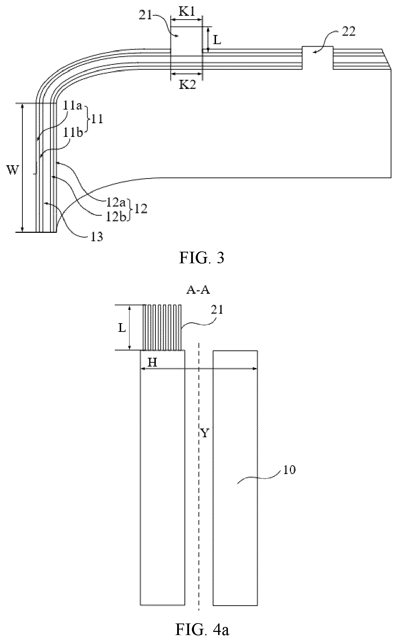

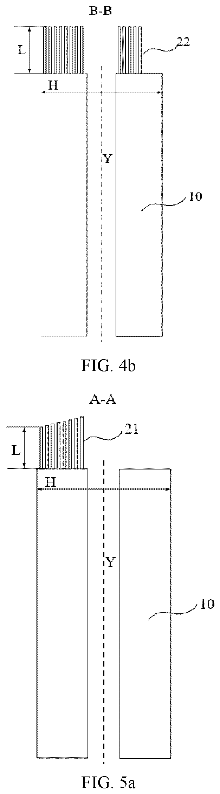

Referring to FIGS.1 to 4b, FIG. 1 is a structural view of a jelly roll battery cell provided in the present application, FIG. 2 is a top view of the jelly roll battery cell provided in FIG. 1, FIG. 3 is a structural view of electrode plates and a separator of the jelly roll battery cell provided in FIG. 1, FIG. 4a is a partial sectional view along line A-A of the jelly roll battery cell provided in FIG. 2, and FIG. 4b is a partial sectional view along line B-B of the jelly roll battery cell provided in FIG. 2.

Referring to FIGS. 1 to 4b, provided in the embodiments of the present application is a jelly roll battery cell 100, including a main body portion 10 and a tab portion 20,

where the main body portion 10 includes a positive electrode plate 11, a negative electrode plate 12 and a separator 13. The separator 13 is stacked between the positive electrode plate 11 and the negative electrode plate 12. The main body portion 10 forms a flat winding body by means of winding around a virtual axis Y. The main body portion 10 includes a plurality of circles of winding portions 101 along a winding direction. The winding portion 101 includes a positive winding portion 101a, a negative winding portion 101b and a separator winding portion 101c. Each winding portion 101 makes a revolution around the virtual axis Y, each winding portion 101 includes two layers of winding sub-portions in a thickness direction H of the main body portion 10, and each layer of winding sub-portions makes a semi-revolution around the virtual axis Y. The two layers of winding sub-portions of each winding portion 101 are arranged axially symmetrically in a thickness direction of the main body portion 10, and namely, are arranged axially symmetrically along an axis X perpendicular to the thickness direction H of the main body portion 10 and perpendicular to a direction of the virtual axis Y. Each layer of winding sub-portions includes a positive winding sub-portion, a separator winding sub-portion and a negative winding sub-portion, which are stacked.

The tab portion 20 is connected to one side of the main body portion 10, and includes a plurality of positive tabs 21 and a plurality of negative tabs 22.

One side of each positive winding portion 101a in one part of positive winding portions 101a is connected to one positive tab 21, and one side of each positive winding portion 101a in the other part of the positive winding portions 101a is connected to two positive tabs 21. The two positive tabs 21 of each positive winding portion 101a in the other part of the positive winding portions 101a are located on two opposite sides of the virtual axis Y along the thickness direction H of the main body portion 10. That is, one side of each positive winding portion 101a in one part of positive winding portions 101a is connected to one positive tab 21, and one side of each layer of positive winding sub-portions of each positive winding portion 101a in the other part of the positive winding portions 101a is connected to one positive tab 21.

And/or, one side of each negative winding portion 101b in one part of negative winding portions 101b is connected to one negative tab 22, and one side of each negative winding portion 101b in the other part of the negative winding portions 101b is connected to two negative tabs 22. The two negative tabs 22 of each negative winding portion 101b in the other part of the negative winding portions 101b are located on two opposite sides of a virtual axis Y along the thickness direction of the main body portion 10. That is, one side of each negative winding portion 101b in one part of negative winding portions 101b is connected to one negative tab 22, and one side of each negative winding portion 101b in the other part of the negative winding portions 101b is connected to one negative tab 22.

In the present application:
the jelly roll battery cell 100 represents a flat winding body formed by winding the positive electrode plate 11, the negative electrode plate 12 and the separator 13 around the virtual axis Y by hand or by machine. Specifically, in a procedure for forming the battery cell, the electrode plates and the separator 13 provide winding support for winding the battery cell by using a winding needle as a supporting component of the battery cell, and the battery cell is wound on an outer side of the winding needle. After the step of winding the battery cell is completed, the winding needle can be removed from the battery cell.

The main body portion 10 represents a flat winding body formed by winding the positive electrode plate 11, the negative electrode plate 12 and the separator 13. The positive electrode plate 11 includes a positive current collector 11a and a positive active material layer 11b. A surface of the positive current collector 11a is coated with the positive active material layer 11b. Taking a lithium-ion battery as an example, a material of the positive current collector 11a may be aluminum, and a positive active material may be lithium cobaltate, lithium iron phosphate, ternary lithium or lithium manganate. The negative electrode plate 12 includes a negative current collector 12a and a negative active material layer 12b. A surface of the negative current collector 12a is coated with the negative active material layer 12b. Taking the lithium-ion battery as an example, a material of the negative current collector 12a may be copper, and a negative active material may be carbon or silicon, etc. A material of the separator 13 may be PP or PE. The virtual axis Y represents a line connecting centroids of all cross-sections of the main body portion 10.

The winding portion 101 represents a part of the positive electrode plate 11, a part of the negative electrode plate 12 or a part of the separator 13 of each circle of winding in the main body portion 10 formed by a plurality of circles of winding. The positive winding portion 101a represents the part of the positive electrode plate 11 of each circle of winding in the main body portion 10 formed by the plurality of circles of winding. The negative winding portion 101b represents the part of the negative electrode plate 12 of each circle of winding in the main body portion 10 formed by the plurality of circles of winding. The separator winding portion 101c represents the part of the separator 13 of each circle of winding in the main body portion 10 formed by the plurality of circles of winding.

The tab portion 20 is connected to the main body portion 10, and is an electrical conductor for leading out the positive electrode plate 11 and the negative electrode plate 12 of the main body portion 10. The positive tab 21 represents a tab for leading out the positive electrode plate 11, and can be integrally formed with the positive current collector 11a. The negative tab 22 represents a tab for leading out the negative electrode plate 12, and can be integrally formed with the negative current collector 12a. In some specific embodiments, the positive current collector 11a uncoated with the positive active material protrudes relative to the positive current collector 11a coated with the positive active material, and a part of the positive current collector 11a uncoated with the positive active material serves as the positive tab 21. The negative current collector 12a uncoated with the negative active material protrudes relative to the negative current collector 12a coated with the negative active material, and a part of the negative current collector 12a uncoated with the negative active material serves as the negative tab 22.

One positive tab 21 is connected to one side of the positive winding portion 101a means that one positive tab 21 is disposed on one side of the positive winding portion 101a along the virtual axis Y. Two positive tabs 21 are connected to one side of the positive winding portion 101a means that two positive tabs 21 are disposed on one side of the positive winding portion 101a along the virtual axis Y. One negative tab 22 is connected to one side of the negative winding portion 101b means that one negative tab 22 is disposed on one side of the negative winding portion 101b along the virtual axis Y. Two negative tabs 22 are connected to one side of the negative winding portion 101b means that two negative tabs 22 are disposed on one side of the negative winding portion 101b along the virtual axis Y. Connecting or disposing one positive tab 21 means that only one positive tab 21 is connected or disposed. Connecting or disposing two positive tabs 21 means that only two positive tabs 21 are connected or disposed. Connecting or disposing one negative tab 22 means that only one negative tab 22 is connected or disposed. Connecting or disposing two positive tabs 22 means that only two positive tabs 22 are connected or disposed.

In the present application, by connecting one positive tab 21 to one side of each positive winding portion 101a in one part of positive winding portions 101a, and connecting two positive tabs 21 to one side of each positive winding portion 101a in the other part of the positive winding portions 101a, the number of positive tabs 21 is increased, and the flow area of the jelly roll battery cell 100 is increased; in addition, due to a restriction on the number of positive tabs 21, interlayer pseudo soldering between excessive positive tabs 21 and electrically conductive connecting welds is avoided.

In the present application, by connecting one negative tab 22 to one side of each negative winding portion 101b in one part of negative winding portions 101b, and connecting two negative tabs 22 to one side of each negative winding portion 101b in the other part of the negative winding portions 101b, the number of negative tabs 22 is increased, and the flow area of the jelly roll battery cell 100 is increased; in addition, due to a restriction on the number of negative tabs 22, interlayer pseudo soldering between excessive negative tabs 22 and electrically conductive connecting welds is avoided.

Specifically, as shown in FIG. 2, in this embodiment, one side of each negative winding portion 101b in one part of negative winding portions 101b is connected to one negative tab 22, one side of each negative winding portion 101b in the other part of the negative winding portions 101b is connected to two negative tabs 22, and the two negative tabs 22 of each negative winding portion 101b in the other part of the negative winding portions 101b are arranged axially symmetrically along the thickness direction of the main body portion 10; and each positive winding portion 101a is connected to one positive tab 21. That is, a plurality of negative tabs 22 in a first frame S1 and a plurality of negative tabs 22 in a second frame S2 in FIG. 2 are arranged axially symmetrically along the axis X perpendicular to the thickness direction of the main body portion 10 and perpendicular to the direction of the virtual axis Y.

In this embodiment, the number of the plurality of negative tabs 22 is increased than that when each circle of the negative winding portion 101b is provided with only one negative tab 22, which increases the flow area of the jelly roll battery cell 100 and reduces the internal resistance of the jelly roll battery cell 100, and the number of the plurality of negative tabs 22 does not lead to the problem of interlayer pseudo soldering between excessive negative tabs 22 and electrically conductive connecting welds. For example, the situation that each circle of the negative winding portion 101b is provided with two negative tabs 22, resulting in the problem of interlayer pseudo soldering of electrically conductive connecting welds is avoided. The number of circles of the negative winding portions 101b provided with two negative tabs 22 can be specifically selected and designed according to the total number of circles of the negative winding portions 101b.

Continuously referring to FIGS. 1-3, in the jelly roll battery cell 100, the positive electrode plate 11 includes a positive current collector 11a and a positive active material layer 11b arranged on one side of the positive current collector 11a; the negative electrode plate 12 includes a negative current collector 12a and a negative active material layer 12b arranged on one side of the negative current collector 12a.

One end of the positive tab 21 is connected to the positive current collector 11a of the corresponding positive winding portion 101a, and the other end thereof is away from the positive current collector 11a along the virtual axis Y. One end of the negative tab 22 is connected to the negative current collector 12a of the corresponding negative winding portion 101b, and the other end thereof is away from the negative current collector 12a along the virtual axis Y. Along the thickness direction of the main body portion 10, a plurality of positive tabs 21 located on the same side of the virtual axis Y are stacked, and a plurality of negative tabs 22 located on the same side of the virtual axis Y are stacked.

In some specific embodiments, the positive tab 21 has the same thickness as the positive current collector 11a; and the negative tab 22 has the same thickness as the negative current collector 12a.

In some embodiments, as shown in FIG. 2, an innermost circle of the flat winding body is a part of the negative winding portions 101b; and an outermost circle of the flat winding body is a part of the negative winding portions 101b, which is intended to slow down the occurrence of lithium precipitation. In other words, the negative winding portion 101b has at least one more circle than the positive winding portion 101a.

In some embodiments, in the direction of the virtual axis Y, the plurality of positive tabs 21 stacked are tabs with an equal length or tabs with gradient lengths. In the direction of the virtual axis Y, the plurality of negative tabs 22 stacked are tabs with an equal length or tabs with gradient lengths. In the thickness direction H of the main body portion 10, the plurality of positive tabs 21/negative tabs 22 stacked can overlap or partially overlap (i.e., be staggered) or be arranged at intervals in respective width directions thereof. It can be understood that by means of a solution in which the plurality of positive tabs 21/negative tabs 22 stacked partially overlap or are arranged at intervals in the thickness direction H of the main body portion 10, the widths of the plurality of positive tabs 21/negative tabs 22 are increased, and the areas of a copper adapter and an aluminum adapter are also increased accordingly. In case of an excessively narrow design in a width direction of the battery cell, there will be problems of interference between negative and positive electrodes or interference between the liquid injection hole and a positive adapter, in which the former has the risk of short circuits, and the latter affects liquid injection of the battery. Therefore, in this embodiment, the plurality of positive tabs 21/negative tabs 22 stacked overlap in respective width directions thereof.

In some embodiments, as shown in FIG. 3 and FIG. 4a, in the direction of the virtual axis Y, the plurality of positive tabs 21 stacked are tabs with an equal length, and the length L of the positive tabs 21 is 28%-29% of the width W of the positive winding portions 101a connected to the positive tabs 21. As shown in FIG. 3 and FIG. 4b, in the direction of the virtual axis Y, the plurality of negative tabs 22 stacked are tabs with an equal length, and the length L of the negative tabs 22 is 28%-29% of the width W of the negative winding portions 101b connected to the negative tabs 22.

In some embodiments, as shown in FIG. 3, the width K1 of the end that is of the positive tab 21 and that is away from the positive current collector 11a is 10%-12.5% of the circumference of the winding portion 101 at the innermost circle of the flat winding body, and the width K2 of the end that is of the positive tab 21 and that is connected to the positive current collector 11a is 11%-14% of the circumference of the winding portion 101 at the innermost circle of the flat winding body. In some embodiments, the flat winding body has a length direction and a width direction; the length direction is a length direction of the flat winding body before winding along the winding direction or after unwinding; the virtual axis Y is parallel to the width direction; and the width of the negative electrode plate 12 is greater than the width of the positive electrode plate 11, and the length of the negative electrode plate 12 is greater than the length of the positive electrode plate 11.

In some embodiments, one side of each positive winding portion 101a in the positive winding portions 101a is connected to the positive tab 21, and is specifically connected to one or two positive tabs 21. One side of each negative winding portion 101b in the negative winding portions 101b is connected to the negative tab 22, and is specifically connected to one or two negative tabs 22. Alternatively, one side of each positive winding portion 101a in the positive winding portions 101a is connected to the positive tab 21, and is specifically connected to one or two positive tabs 21; in the negative winding portions 101b, the negative winding portion 101b at the innermost circle or the negative winding portion 101b at the outermost circle is not provided with the negative tab 22; and one side of each of the other negative winding portions 101b is connected to the negative tab 22, and is specifically connected to one or two negative tabs 22.

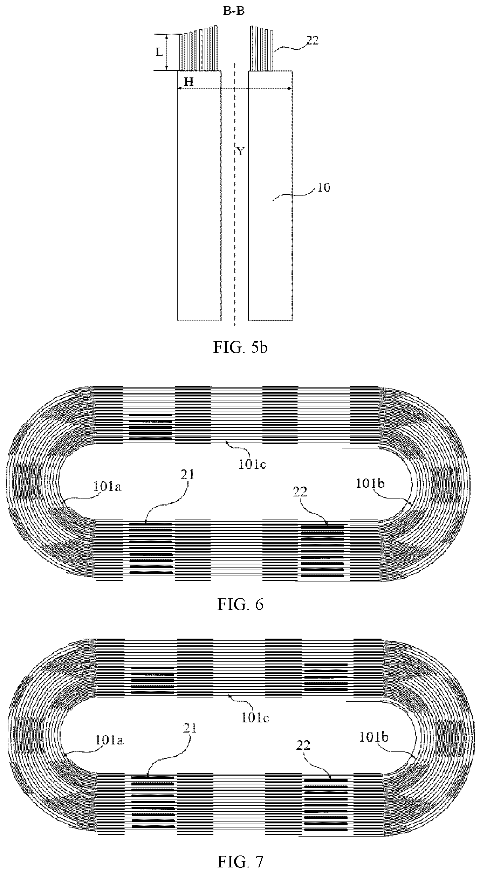

In the jelly roll battery cell 100 in some embodiments, along a direction from inner circles to outer circles, one side of each positive winding portion 101a in the first half of positive winding portions 101a is connected to two positive tabs 21, and one side of each positive winding portion 101a in the second half of the positive winding portions 101a is connected to one positive tab 21 (as shown in FIG. 6 and FIG. 7).

And/or, along the direction from inner circles to outer circles, one side of each negative winding portion 101b in the first half of negative winding portions 101b is connected to two negative tabs 22, and one side of each negative winding portion 101b in the second half of the negative winding portions 101b is connected to one negative tab 22 (as shown in FIG. 2 and FIG. 7).

Specifically, by connecting two positive tabs 21 to the inner circles of the positive winding portions 101a in the jelly roll battery cell 100, and connecting one positive tab 21 to the outer circles of the positive winding portions 101a, the flow area of the jelly roll battery cell 100 is increased, and the internal resistance of the jelly roll battery cell 100 is decreased; the number of the plurality of positive tabs 21 does not lead to the problem of interlayer pseudo soldering between excessive positive tabs 21 and electrically conductive connecting welds, and the arrangement mode of the plurality of positive tabs 21 causes the positive tabs 21 to be closely spaced, such that the welding effect is good. By connecting two negative tabs to one side of each negative winding portion in the jelly roll battery cell 100, and connecting one negative tab to one side of the outer circles of the negative winding portions 101b, the flow area of the jelly roll battery cell 100 is increased, and the internal resistance of the jelly roll battery cell 100 is reduced; the number of the plurality of negative tabs 22 does not lead to the problem of interlayer pseudo soldering between excessive negative tabs 22 and electrically conductive connecting welds, and the arrangement mode of the plurality of negative tabs 22 causes the negative tabs 22 to be closely spaced, such that the welding effect is good.

Referring to FIGS. 5a-5b, FIG. 5a is a second partial sectional view along line A-A of the jelly roll battery cell provided in FIG. 2, and FIG. 5b is a second partial sectional view along line B-B of the jelly roll battery cell provided in FIG. 2.

Referring to FIGS. 5a and 5b, the jelly roll battery cell 100 provided in this embodiment differs from the jelly roll battery cell 100 provided in FIG. 4a in that: as shown in FIG. 5a, in the direction of the virtual axis Y, the plurality of positive tabs 21 in this embodiment are tabs with gradient lengths; in the plurality of positive tabs 21, the maximum length of the positive tabs 21 is 28%-29% of the width W of the positive winding portions 101a connected to the positive tabs 21, and the minimum length of the positive tabs 21 is 19%-20% of the width W of the positive winding portions 101a connected to the positive tabs 21; and the lengths L of the plurality of positive tabs 21 stacked are decreased progressively layer by layer as per uniform-gradient dimensions along the direction from inner circles to outer circles.

As shown in FIG. 5b, the plurality of negative tabs 22 stacked are tabs with gradient lengths; in the plurality of negative tabs 22, the maximum length of the negative tabs 22 is 28%-29% of the width W of the negative winding portions 101b connected to the negative tabs 22, and the minimum length of the negative tabs 22 is 19%-20% of the width W of the negative winding portions 101b connected to the negative tabs 22; and the lengths L of the plurality of negative tabs 22 stacked are decreased progressively layer by layer as per uniform-gradient dimensions along the direction from inner circles to outer circles.

Referring to FIG. 6, FIG. 6 is a top view of a second embodiment of a jelly roll battery cell provided in the present application.

Referring to FIG. 6, the jelly roll battery cell 100 provided in this embodiment differs from the jelly roll battery cell 100 provided in FIG. 2 in that: in this embodiment, one side of each positive winding portion 101a in one part of positive winding portions 101a is connected to one positive tab 21, and one side of each positive winding portion 101a in the other part of the positive winding portions 101a is connected to two positive tabs 21, and the two positive tabs 21 of each positive winding portion 101a in the other part of the positive winding portions 101a are arranged axially symmetrically along the thickness direction H of the main body portion 10; and each negative winding portion 101b is connected to one negative tab 22.

In this embodiment, the number of the plurality of positive tabs 21 is increased than that when each circle of the positive winding portion 101a is provided with only one positive tab 21, which increases the flow area of the jelly roll battery cell 100 and reduces the internal resistance of the jelly roll battery cell 100, and the number of the plurality of positive tabs 21 does not lead to the problem of interlayer pseudo soldering between excessive positive tabs 21 and electrically conductive connecting welds.

Referring to FIG. 7, FIG. 7 is a top view of a third embodiment of a jelly roll battery cell provided in the present application.

Referring to FIG. 7, the jelly roll battery cell 100 shown in this embodiment differs from the jelly roll battery cell 100 shown in FIG. 2 in that: in the jelly roll battery cell 100 provided in this embodiment, one side of each positive winding portion 101a in one part of positive winding portions 101a is connected to one positive tab 21, and one side of each positive winding portion 101a in the other part of the positive winding portions 101a is connected to two positive tabs 21. Additionally, one side of each negative winding portion 101b in one part of negative winding portions 101b is connected to one negative tab 22, and one side of each negative winding portion 101b in the other part of the negative winding portions 101b is connected to two negative tabs 22.

In the above embodiment, the number of the plurality of positive tabs 21 and the number of the plurality of negative tabs 22 are both increased, which jointly improve the overall flow area of the jelly roll battery cell 100, and avoid interlayer pseudo soldering between excessive positive tabs 21, excessive negative tabs 22 and electrically conductive connecting welds, and the number of the plurality of negative tabs 21 has the same increasing trend as that of the plurality of positive tabs 22, which has a synergistic effect on the improvement in the overall flow ability of the jelly roll battery cell 100.

In some embodiments, along the direction from inner circles to outer circles, one side of each positive winding portion 101a in odd-numbered circles of positive winding portions 101a is connected to two positive tabs 21, and one side of each positive winding portion 101a in even-numbered circles of the positive winding portions 101a is connected to one positive tab 21. Alternatively, one side of each positive winding portion 101a in odd-numbered circles of positive winding portions 101a is connected to one positive tab 21, and one side of each positive winding portion 101a in even-numbered circles of positive winding portions 101a is connected to two positive tabs 21. And/or, along the direction from inner circles to outer circles, one side of each negative winding portion 101b in odd-numbered circles of negative winding portions 101b is connected to two negative tabs 22, and one side of each negative winding portion 101b in even-numbered circles of the negative winding portions 101b is connected to one negative tab 22; alternatively, one side of each negative winding portion 101b in odd-numbered circles of negative winding portions 101b is connected to one negative tab 22, and one side of each negative winding portion 101b in even-numbered circles of the negative winding portions 101b is connected to two negative tabs 22.

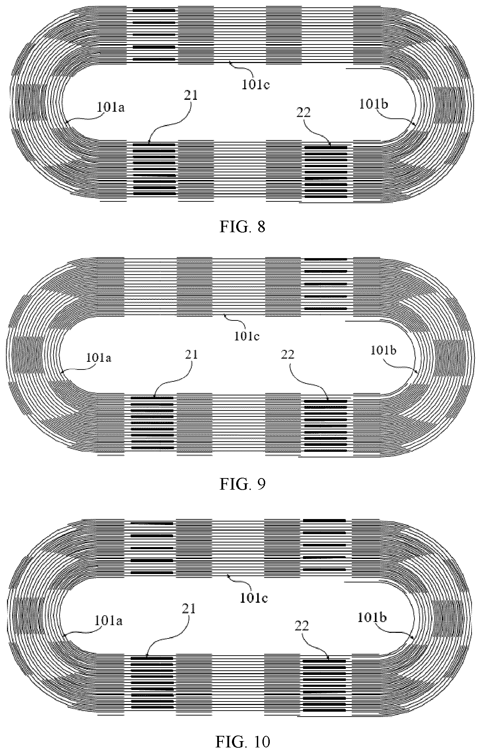

Referring to FIG. 8, FIG. 8 is a top view of a fourth embodiment of the jelly roll battery cell provided in the present application.

Referring to FIG. 8, the jelly roll battery cell 100 shown in this embodiment differs from the jelly roll battery cell 100 shown in FIG. 2 in that: in this embodiment, along the direction from inner circles to outer circles, one side of each positive winding portion 101a in odd-numbered circles of positive winding portions 101a is connected to two positive tabs 21, and one side of each positive winding portion 101a in even-numbered circles of the positive winding portions 101a is connected to one positive tab 21; and one side of each circle of the negative winding portion 101b is connected to one negative tab 22. Such an arrangement mode not only increases the flow area of the jelly roll battery cell 100, but also balances distribution of the plurality of positive tabs 21 and improves the welding effect of the plurality of positive tabs 21.

Referring to FIG. 9, FIG. 9 is a top view of a fifth embodiment of a jelly roll battery cell provided in the present application.

Referring to FIG. 9, the jelly roll battery cell 100 shown in this embodiment differs from the jelly roll battery cell 100 shown in FIG. 2 in that: in this embodiment, along the direction from inner circles to outer circles, one side of each negative winding portion 101b in odd-numbered circles of positive winding portions 101b is connected to two negative tabs 22, and one side of each negative winding portion 101b in even-numbered circles of the negative winding portions 101b is connected to one negative tab 22; and one side of each circle of the positive winding portion 101b is connected to one positive tab 21. Such an arrangement mode not only increases the flow area of the jelly roll battery cell 100, but also balances distribution of the plurality of negative tabs 22 and improves the welding effect of the plurality of negative tabs 22.

Referring to FIG. 10, FIG. 10 is a top view of a sixth embodiment of a jelly roll battery cell provided in the present application.

Referring to FIG. 10, the jelly roll battery cell 100 shown in this embodiment differs from the jelly roll battery cell 100 shown in FIG. 2: in this embodiment, along the direction from inner circles to outer circles, one side of each negative winding portion 101b in odd-numbered circles of negative winding portions 101b is connected to two negative tabs 22, one side of each negative winding portion 101b in even-numbered circles of the negative winding portions 101b is connected to one negative tab 22. Additionally, along the direction from inner circles to outer circles, one side of each positive winding portion 101a in odd-numbered circles of positive winding portions 101a is connected to two positive tabs 21, one side of each positive winding portion 101a in even-numbered circles of the positive winding portions 101a is connected to one positive tab 21, and one side of each circle of the negative winding portion 101b is connected to one negative tab 22. Such an arrangement mode not only increases the flow area of the jelly roll battery cell 100, but also balances distribution of the plurality of positive tabs 21 and the plurality of negative tabs 22 and improves the welding effect of the plurality of positive tabs 21 and the plurality of negative tabs 22.

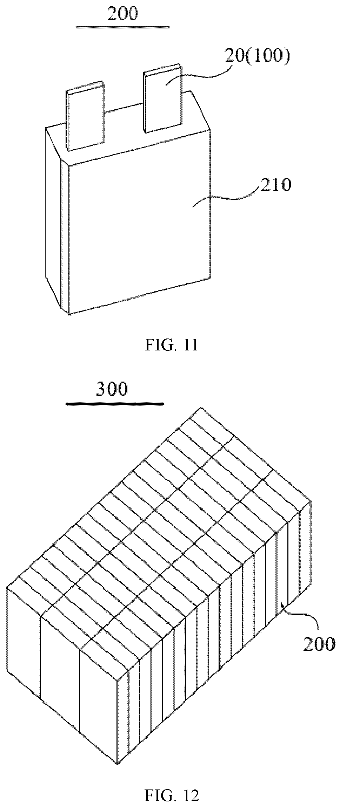

Referring to FIG. 11, FIG. 11 is a structural view of a battery provided in the present application.

Referring to FIG. 11, provided in the present application is a battery 200, including a shell 210 and any one of above jelly roll battery cells 100.

In this embodiment, the battery 200 represents a single physical module, which includes one or more jelly roll battery cells 100 (as shown in FIGS. 1-10) to improve the voltage and capacity. The jelly roll battery cell 100 includes a main body portion 10 and a tab portion 20, where the main body portion 10 includes a positive electrode plate 11, a negative electrode plate 12 and a separator 13. The separator 13 is stacked between the positive electrode plate 11 and the negative electrode plate 12. The main body portion 10 forms a flat winding body by means of winding around a virtual axis Y. The main body portion 10 includes a plurality of circles of winding portions 101 along a winding direction. The winding portion 101 includes a positive winding portion 101a, a negative winding portion 101b and a separator winding portion 101c. The tab portion 20 is connected to one side of the main body portion 10, and includes a plurality of positive tabs 21 and a plurality of negative tabs 22.

One side of each positive winding portion 101a in one part of positive winding portions 101a is connected to one positive tab 21, and one side of each positive winding portion 101a in the other part of the positive winding portions 101a is connected to two positive tabs 21. The two positive tabs 21 of each positive winding portion 101a in the other part of the positive winding portions 101a are located on two opposite sides of the virtual axis Y along the thickness direction H of the main body portion 10.

And/or, one side of each negative winding portion 101b in one part of negative winding portions 101b is connected to one negative tab 22, and one side of each negative winding portion 101b in the other part of the negative winding portions 101b is connected to two negative tabs 22. The two negative tabs 22 of each negative winding portion 101b in the other part of the negative winding portions 101b are located on two opposite sides of a virtual axis Y along the thickness direction of the main body portion 10.

Referring to FIG. 12, FIG. 12 is a structural view of a battery assembly provided in the present application.

Referring to FIG. 12, provided in the present application is a battery assembly 300, including the above batteries 200. The battery assembly 300 may further include a box, which is used for providing an accommodating space for the batteries 200, and may be of various shapes. In the battery assembly 300, a plurality of batteries 200 may be connected in series or in parallel, or in a series-parallel manner, which means that both series connection and parallel connection are involved in the plurality of batteries 200. The plurality of batteries 200 may be directly connected in series or in parallel or in the series-parallel manner, and then the plurality of batteries 200 are accommodated in the box as a whole; and of course, it is also possible for the battery assembly 300 that the plurality of batteries 200 are firstly connected in series or in parallel or in the series-parallel manner to form battery modules, and then a plurality of battery modules are connected in series or in parallel or in the series-parallel manner as a whole, and are accommodated in the box. The battery assembly 300 may further include other structures. For example, the battery assembly 300 may further include a busbar component for realizing electrical connections among the plurality of batteries 200. Each battery 200 may be a secondary battery or a primary battery; and same may also be a lithium-sulfur battery, a sodium-ion battery or a magnesium-ion battery, but is not limited thereto.

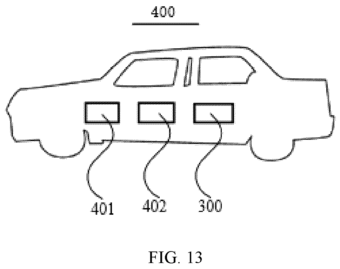

Referring to FIG. 13, FIG. 13 is a structural view of an electric device provided in the present application.

Referring to FIG. 13, provided in the present application is an electric device, including the above battery assembly 300.

The electric device may be a mobile phone, a computer, an electric motorcycle, an electric vehicle or the like. This embodiment takes the electric vehicle 400 as an example for description. The battery assembly 300 is arranged in the electric vehicle 400, and the battery assembly 300 may be arranged at the bottom, front or rear of the electric vehicle 400. The battery assembly 300 may be used for power supply of the electric vehicle 400; for example, the battery assembly 300 may serve as an operational power supply of the electric vehicle 400. The electric vehicle 400 may further include a controller 401 and a motor 402, and the controller 401 is used for controlling the battery assembly 300 to supply the motor 402 with power, such as operation power for the electric vehicle 400 during startup, navigation and driving.

In some embodiments of the present application, the battery assembly 300 may serve as not only an operational power supply of the electric vehicle 400, but also a driving power supply of the electric vehicle 400 to supply driving power for the electric vehicle 400.

In several embodiments provided in the present application, it should be understood that systems, devices and methods disclosed can be implemented by other means. For example, embodiments of the device described above are only illustrative; for example, division of units is only division of logical functions, and other division methods can be used for actual implementation; for example, a plurality of units or assemblies can be combined or integrated into another system; alternatively, some features can be omitted or are not implemented. Moreover, mutual coupling or direct coupling or communication connection shown or discussed can be achieved by means of some interfaces, and indirect coupling or communication connection of devices or units can be in electrical, mechanical or other forms.

In addition, various functional units in embodiments of the present application can be integrated into one processing unit; alternatively, each unit can exist separately and physically, or two or more units can be integrated into one unit. The integrated units can be implemented as hardware or functional units of software.

The foregoing are only embodiments of the present application and do not limit the patent scope of the present application. All equivalent structure or equivalent workflow transformations, which are made by means of contents of the description and drawings of the present application and directly or indirectly applied in other relevant technical fields, are similarly included in the patent protection scope of the present application.

## Claims

1. A jelly roll battery cell, comprising:
a main body portion, which comprises a positive electrode plate, a negative electrode plate and a separator, wherein the separator is stacked between the positive electrode plate and the negative electrode plate; the main body portion forms a flat winding body by means of winding around a virtual axis; the main body portion comprises a plurality of circles of winding portions along a winding direction; the winding portion comprises a positive winding portion, a negative winding portion and a separator winding portion; and
a tab portion, which is connected to one side of the main body portion, and comprises a plurality of positive tabs and a plurality of negative tabs,
wherein one side of each positive winding portion in one part of positive winding portions is connected to one positive tab, and one side of each positive winding portion in the other part of the positive winding portions is connected to two positive tabs; the two positive tabs of each positive winding portion in the other part of the positive winding portions are located on two opposite sides of the virtual axis along a thickness direction of the main body portion; and/or
one side of each negative winding portion in one part of negative winding portions is connected to one negative tab, and one side of each negative winding portion in the other part of the negative winding portions is connected to two negative tabs; and the two negative tabs of each negative winding portion in the other part of the negative winding portions are located on two opposite sides of the virtual axis along the thickness direction of the main body portion.

2. The jelly roll battery cell according to claim 1, wherein one side of each positive winding portion in one part of positive winding portions is connected to one positive tab, one side of each positive winding portion in the other part of the positive winding portions is connected to two positive tabs, the two negative tabs of each negative winding portion in the other part of the negative winding portions are arranged axially symmetrically along the thickness direction of the main body portion; and each negative winding portion is connected to one negative tab.

3. The jelly roll battery cell according to claim 1 or 2, wherein one side of each negative winding portion in one part of the negative winding portions is connected to one negative tab, one side of each negative winding portion in the other part of the negative winding portions is connected to two negative tabs, and the two negative tabs of each negative winding portion in the other part of the negative winding portions are arranged axially symmetrically along the thickness direction of the main body portion; and each positive winding portion is connected to one positive tab.

4. The jelly roll battery cell according to any one of claims 1-3, wherein along a direction from inner circles to outer circles, one side of each positive winding portion in the first half of the positive winding portions is connected to two positive tabs, and one side of each positive winding portion in the second half of the positive winding portions is connected to one positive tab; and/or
along the direction from inner circles to outer circles, one side of each negative winding portion in the first half of the negative winding portions is connected to two negative tabs, and one side of each negative winding portion in the second half of the negative winding portions is connected to one negative tab.

5. The jelly roll battery cell according to any one of claims 1-4, wherein along the direction from inner circles to outer circles, one side of each positive winding portion in odd-numbered circles of the positive winding portions is connected to two positive tabs, and one side of each positive winding portion in even-numbered circles of the positive winding portions is connected to one positive tab; alternatively, one side of each positive winding portion in odd-numbered circles of the positive winding portions is connected to one positive tab, and one side of each positive winding portion in even-numbered circles of the positive winding portions is connected to two positive tabs; and/or
along the direction from inner circles to outer circles, one side of each negative winding portion in odd-numbered circles of the negative winding portions is connected to two negative tabs, and one side of each negative winding portion in even-numbered circles of the negative winding portions is connected to one negative tab; or alternatively, one side of each negative winding portion in odd-numbered circles of the negative winding portions is connected to one positive tab, and one side of each negative winding portion in even-numbered circles of the negative winding portions is connected to two negative tabs.

6. The jelly roll battery cell according to any one of claims 1-5, wherein the positive electrode plate comprises a positive current collector and a positive active material layer arranged on one side of the positive current collector; the negative electrode plate comprises a negative current collector and a negative active material layer arranged on one side of the negative current collector;
one end of the positive tab is connected to the positive current collector of the corresponding positive winding portion, and the other end thereof is away from the positive current collector along the virtual axis; one end of the negative tab is connected to the negative current collector of the corresponding negative winding portion, and the other end thereof is away from the negative current collector along the virtual axis; and along the thickness direction of the main body portion, the plurality of positive tabs located on the same side of the virtual axis are stacked, and the plurality of negative tabs located on the same side of the virtual axis are stacked.

7. The jelly roll battery cell according to claim 6, wherein the positive tab has the same thickness as the positive current collector; and the negative tab has the same thickness as the negative current collector.

8. The jelly roll battery cell according to claim 6 or 7, wherein in the direction of the virtual axis, the plurality of positive tabs stacked are tabs with an equal length or tabs with gradient lengths; and in the direction of the virtual axis, the plurality of negative tabs stacked are tabs with an equal length or tabs with gradient lengths.

9. The jelly roll battery cell according to claim 8, wherein the plurality of positive tabs stacked are tabs with an equal length, and the length of the positive tabs is 28%-29% of the width of the positive winding portions connected to the positive tabs; and the plurality of negative tabs stacked are tabs with an equal length, and the length of the negative tabs is 28%-29% of the width of the negative winding portions connected to the negative tabs.

10. The jelly roll battery cell according to claim 8, wherein the plurality of positive tabs stacked are tabs with gradient lengths; in the plurality of positive tabs, the maximum length of the positive tabs is 28%-29% of the width of the positive winding portions connected to the positive tabs, and the minimum length of the positive tabs is 19%-20% of the width of the positive winding portions connected to the positive tabs; and the lengths of the plurality of positive tabs stacked are decreased progressively layer by layer as per uniform-gradient dimensions along the direction from inner circles to outer circles;
the plurality of negative tabs stacked are tabs with gradient lengths; in the plurality of negative tabs, the maximum length of the negative tabs is 28%-29% of the width of the negative winding portions connected to the negative tabs, and the minimum length of the negative tabs is 19%-20% of the width of the negative winding portions connected to the negative tabs; and the lengths of the plurality of negative tabs stacked are decreased progressively layer by layer as per uniform-gradient dimensions along the direction from inner circles to outer circles.

11. The jelly roll battery cell according to any one of claims 6-10, wherein the width of the end that is of the positive tab and that is away from the positive current collector is 10%-12.5% of the circumference of the winding portion at the innermost circle of the flat winding body, and the width of the end of the positive tab connected to the positive winding portion is 11%-14% of the circumference of the winding portion at the innermost circle of the flat winding body.

12. The jelly roll battery cell according to any one of claims 1-11, wherein the flat winding body has a length direction and a width direction; the virtual axis is parallel to the width direction; and the width of the negative electrode plate is greater than the width of the positive electrode plate, and the length of the negative electrode plate is greater than the length of the positive electrode plate.

13. The jelly roll battery cell according to any one of claims 1-12, wherein an innermost circle of the flat winding body is a part of the negative winding portions; and an outermost circle of the flat winding body is a part of the negative winding portions.

14. The jelly roll battery cell according to any one of claims 1-13, wherein one side of each positive winding portion in the positive winding portions is connected to one or two positive tabs; one side of each negative winding portion in the negative winding portions is connected to one or two negative tabs; or
one side of each positive winding portion in the positive winding portions is connected to one or two positive tabs; in the negative winding portions, the negative winding portion at the innermost circle or the negative winding portion at the outermost circle is not provided with the negative tab; and one side of each of the other negative winding portions is connected to one or two negative tabs.

15. A battery, comprising the jelly roll battery cell according to any one of claims 1-14.

16. A battery assembly, comprising the batteries according to claim 15.

17. An electric device, comprising the battery assembly according to claim 16.
